Europäisches Patentamt

European Patent Office

Office européen des brevets

(11) Veröffentlichungsnummer: **0 007 971**
**A1**

(12) **EUROPÄISCHE PATENTANMELDUNG**

(21) Anmeldenummer: 79101236.2

(22) Anmeldetag: 24.04.79

(51) Int. Cl.³: **B 65 D 77/20**

(30) Priorität: 08.08.78 US 932137

(43) Veröffentlichungstag der Anmeldung: 20.02.80
Patentblatt 80/4

(84) Benannte Vertragsstaaten: NL SE

(71) Anmelder: **Boise Cascade Corporation, One Jefferson Square, Boise Idaho 83728 (US)**

(72) Erfinder: **Ellerbrock, Donald C., 1605 Gallant Fox Drive, Florissant Missouri (US)**

(74) Vertreter: **Liesegang, Roland, Dr.-Ing., Sckellstrasse 1, D-8000 München 80 (DE)**

(54) **Verschlussglied aus flexiblem Material.**

(57) Bei einem Verschlußglied (51) aus flexiblem Material für einen oben offenen Behälter ist zwecks Ausbildung einer genau bestimmten Entleerungsöffnung ein das obere Ende des Behälters vollständig überdeckender und mit diesem Ende verbundener Deckel (52) mit einer Abziehlasche (50) vorgesehen, wobei an der am Deckrand gelegenen Verbindungsstelle zwischen Deckel (52) und Abziehlasche (50) ein erster Einschnitt (54) derart angeordnet ist, daß die Abziehlasche zusammen mit dem an sie angrenzenden Teil (52b) des Deckels entlang einer am Einschnitt (54) beginnenden Abreißlinie vom Verschlußglied ablösbar sind und ein Deckelrest (52a) unter Ausbildung der Entleerungsöffnung am Behälter verbleibt.

- 1 -

Verschlußglied aus flexiblem Material

Die Erfindung betrifft ein Verschlußglied aus flexiblem Material für einen oben offenen Behälter.

Membranartige Verschlußglieder dieser Art sind beispielsweise aus der US-PS 3 434 651 oder 3 776 450 bekannt. In der US-PS 3 800 999 ist ein wegwerfbarer Deckel mit Kerblinien beschrieben, die einen ablösbaren Deckelteil bestimmen, mittels dessen ein Zugang in das Behälterinnere geschaffen wird. In der US-PS 3 942 676 schließlich ist ein aus Folie gefertigtes Verschlußglied beschrieben, das einen abtrennbaren Teil enthält.

Bei den bekannten, auf den oberen Behälterrand aufgesetzten Verschlußgliedern besteht das Problem, lediglich einen vorbestimmten Teil des Deckels genau abzulösen, so daß sich eine Entleerungsöffnung bestimmter Größe und Form im restlichen, auf dem Behälter verbleibenden Deckelteil ergibt. So ist es beispielsweise bei bestimmten Behältern, die dazu dienen, körnige Materialien, wie Salz, Zucker, löslichen Kaffee oder dgl., aufzunehmen, wünschenswert, eine Öffnung von solcher Größe zu schaffen, daß die Einführung eines Löffels in den Behälter möglich ist, wobei die Kante der Öffnung flach sein und als ein Mittel dienen soll, an dem der Löffel abgestrichen werden kann, um den entnommenen Inhalt in der Löffelhöhlung entsprechend zu nivellieren. In anderen Fällen kann es erwünscht sein, eine Ausgießöffnung bestimmter Konfiguration im Verschlußglied auszubilden, durch die hindurch der körnige Behälterinhalt gleichmäßig ausgegossen werden kann. Bei relativ großstückigem Behälterinhalt, beispielsweise gerösteten Brotbrocken, soll eine verhältnismäßig große Entnahmeöffnung geschaffen werden. Ein weiteres Problem bei diesen Verschlußgliedern besteht darin,den restlichen, am Behälter verbleibenden Deckelteil daran zu hindern, sich während des Abziehens des lösbaren Deckelteils vom Behälterrand abzuschälen.

Es ist Aufgabe der Erfindung, den geschilderten Mängeln abzuhelfen und ein Behälterverschlußglied  vorzuschlagen,welches die Ausbildung einer genau vorbestimmten Entleerungsöffnung ermöglicht, ohne daß sich dabei ein am Behälter verbleibender Deckelteil vom Behälterrand abschält.

Die Aufgabe wird erfindungsgemäß durch folgende Merkmale gelöst:

a) das Verschlußglied umfaßt einen Deckel, der das offene Behälterende vollständig überdeckt und mit diesem Ende verbunden ist;
b) am Rand des Deckels ist eine Abziehlasche vorgesehen;
c) an der am Deckelrand gelegenen Übergangsstelle zwischen Deckel und Abziehlasche ist ein erster Einschnitt derart angeordnet, daß sowohl die Abziehlasche als auch ein unmittelbar an diese angrenzender Teil des Deckels entlang einer Abreißlinie, die am ersten Einschnitt beginnt, vom Verschlußglied ablösbar sind und ein Rest des Deckels unter Ausbildung einer Entleerungsöffnung am Behälter verbleibt.

Der erste Einschnitt kann als Kerbe, Schlitz oder dgl. ausgebildet sein. Bei einer bevorzugten Ausführungsform der Erfindung ist die Abziehlasche asymmetrisch am Deckel angeordnet und wird seitlich abgezogen, um den ablösbaren Deckelteil von dem am Behälter verbleibenden, restlichen Deckelteil abzulösen. Bei dieser Ausführungsform kann der Deckel einen nach unten abstehenden, ringförmigen Saumteil aufweisen, der mit dem nach außen umgefalteten Behälterrand verbunden wird. Bei einer anderen Ausführungsform liegen Abziehlasche und Deckel zueinander symmetrisch und es ist auf jeder Seite der Lasche ein  den Abreißvorgang einleitender Einschnitt vorgesehen. Bei dieser Ausführungsform wird die Abziehlasche nach oben gezogen, um den lösbaren Deckelteil entlang konvergierender Linien abzureißen. Bei dieser Ausführungsform ist das Verschlußglied im wesentlichen eben und besitzt normalerweise keinen nach unten abstehenden, ringförmigen Saumteil.

Entsprechend einer weiteren bevorzugten Ausführungsform der Erfindung können entlang der Abreißlinien Einkerbungen, Rillen oder dgl. als sogenannte Kerblinien angeordnet sein, so daß das Abreißen genau entlang der Abreißlinie erfolgt.

Am Deckelrand kann ein zweiter Einschnitt in Form einer Einkerbung oder dgl. vorgesehen sein, der an dem anderen, dem ersten Einschnitt gegenüberliegenden Ende der Abreißlinie liegt. Hierdurch ist ein Abschälen des restlichen, am Behälter verbleibenden Deckelteils vom Behälter verhindert.

Außerdem kann eine aus Kunststoff gefertigte Schutzkappe vorgesehen werden, die dann, wenn die Abziehlasche nach unten gebogen ist, über einen nach außen umgebördelten Rand des Behälters aufgeschoben wird.

Der Deckel kann hermetisch abgedichtet mit dem Behälter verbunden werden, beispielsweise durch Klebeverbindung, durch eine thermosensitive Verbindung oder dgl., durch Wärmeschrumpfung, Kräuseln oder durch Umschlagen eines ringförmigen Saumteils des Deckels auf den umgebördelten Rand an der Wand eines zusammengesetzten Behälters. Der Deckel besteht vorzugsweise aus flexiblem Folienmaterial, beispielsweise Aluminiumfolie, Papier, einer Schicht aus Kunststoff oder dgl. Das Klebemittel kann insbesondere in Form einer Flüssigkeit (beispielsweise als Epoxyharz) vorliegen oder als Schicht eines wärmeempfindlichen Materials aufgebracht werden, beispielsweise Polyäthylen, Ionomer, Vinylacetat, Polypropylen oder kristallines, isotaktisches Polypropylen. Dieses wärmeempfindliche Material kann als Laminat zusammen mit dem Folienmaterial des Deckels ausgebildet werden. Andere geeignete Klebemittel sind beispielsweise extrudierbarer Heißsiegelkleber und Vinylcopolymerisate.

Die nachstehende Beschreibung bevorzugter Ausführungsformen der Erfindung dient im Zusammenhang mit beiliegender Zeichnung der weiteren Erläuterung. Es zeigen:

Fig. 1 eine Draufsicht einer ersten Ausführungsform eines teilweise ablösbaren Verschlußgliedes mit symmetrisch angeordneter Abziehlasche und zwei das Abreißen einleitenden Einschnitten;

Fig. 2 eine Einzelansicht im Schnitt entlang der Linie 2-2 in Fig.1;

Fig. 3 eine Draufsicht der Ausführungsform aus Fig. 1 mit abgerissenem Deckelteil;

Fig. 4 und 5 eine Abwandlung der in den voranstehenden Figuren dargestellten Ausführungsform mit geschlossenem bzw. teilweise geöffnetem Deckel;

Fig. 6 eine Draufsicht einer weiteren Abwandlung der Ausführungsform gemäß Fig. 4 und 5 mit einem gewaffelten Verstärkungsmuster am Deckel;

Fig. 7 und 8 eine weitere Ausführungsform eines Verschlußgliedes mit einem einzigen, das Abreißen einleitenden Einschnitt;

Fig. 9 eine explodierte Teilansicht des Verschlußgliedes aus Fig. 7 und 8 mit überziehbarer Schutzkappe;

Fig. 10 eine Schnittansicht entlang der Linie 10-10 in Fig. 9;

Fig. 11 und 12 eine Abwandlung der Ausführungsform von Fig. 7 und 8

und

Fig. 13 eine weiterhin abgewandelte Ausführungsform mit symmetrisch angeordneter Abziehlasche.

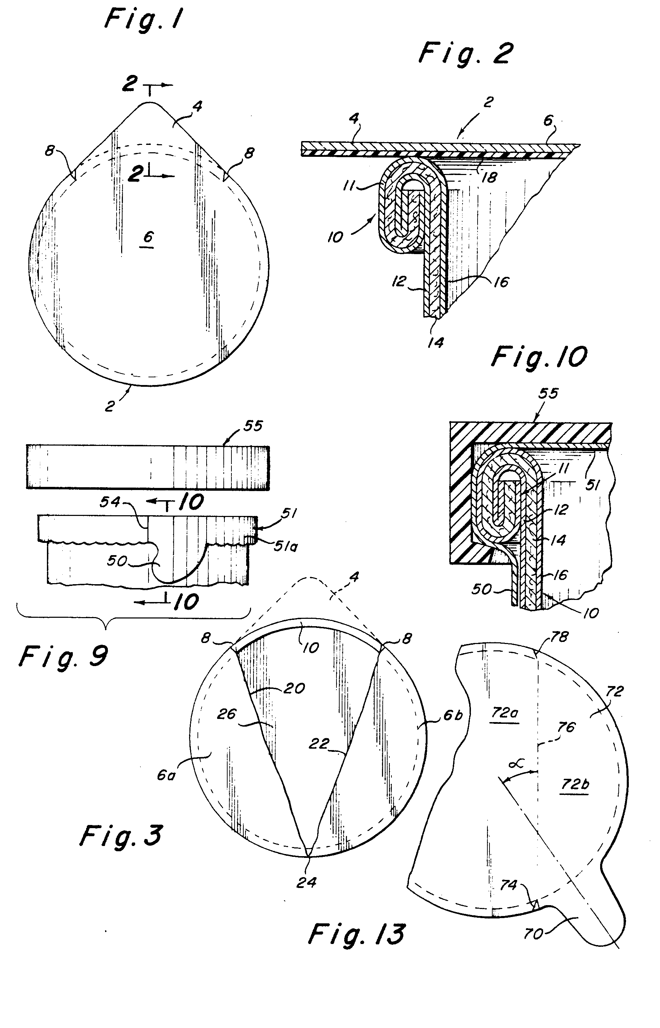

Bei der in Fig. 1 bis 3 dargestellten Ausführungsform ist ein ebenes Verschlußglied 2 aus flexiblem Folienmaterial, beispielsweise Aluminiumfolie, Papier, Kunststoff oder dgl., hergestellt und umfaßt eine Abziehlasche 4, die nach außen vom Rand eines im wesentlichen scheibenförmigen Deckels 6 absteht. Die Abziehlasche 4 ist koplanar mit und symmetrisch zum Deckel 6 angeordnet, wobei zwei Übergangsstellen zu beiden Seiten der Lasche zwischen dieser und dem eigentlichen Deckel entstehen. An jeder Übergangsstelle ist ein einen Abreißvorgang einleitender Einschnitt 8 in Gestalt einer Kerbe oder eines Schlitzes angeordnet.

Wie insbesondere aus Fig. 2 hervorgeht, ist der Deckel 6 hermetisch abgedichtet mit einem nach außen umgebördelten Stirnrandteil 11 eines zusammengesetzten Behälters 10 verbunden. Die Verbindung erfolgt über eine Schicht 18 herkömmlichen Bindemittels. Vorzugsweise ist das Bindemittel wärmesensitiv und besteht beispielsweise aus Polyäthylen oder einem Vinylcopolymerisat, welches in Form eines Laminates oder einer Schicht auf das Folienmaterial des Deckels aufgebracht ist. Bei dem Bindemittel kann es sich auch um ein Klebemittel, insbesondere einen extrudierbaren Heißsiegelkleber, ein übliches flüssiges Klebemittel oder dgl. handeln. Die hermetische Abdichtung kann daher entweder eine mit einem flüssigen Klebemittel erzeugte Verbindung oder eine Heißsiegelverbindung sein. Wie an sich bekannt, umfaßt der zusammengesetzte Behälter 10 eine äußere, gewöhnlich mit einem Aufdruck versehene Etikettenschicht 12 (aus Folie, Pappe, Folien-Papier-Laminat oder dgl.), eine faserige Wandschicht 14 (beispielsweise aus Pappe) und eine undurchlässige, innere Futterschicht 16 (beispielsweise aus Aluminiumfolie). Wegen des nach außen umgebördelten Stirnrandes 11 der zusammengesetzten Behälterwand ist das Verschlußglied 2 mit der Futterschicht 16 des Behälters 10 über die erwähnte Verbindungsschicht 18 verbunden. Die Schicht 18 kann beispielsweise auf die Innenseite der undurchlässigen Futterschicht 16 aufgebracht werden.

Wie in Fig. 3 dargestellt, ergibt sich beim Nachobenziehen der symmetrischen Abziehlasche 4 in einer vom Behälter 10 abgekehrten Richtung ein anfängliches Einreißen des Deckels 6, welches an den ersten Einschnitten 8 beginnt. Wenn daher die Abziehlasche 4 nach oben vom Behälter weggezogen wird, konvergieren zwei Abreißlinien 20, 22, die an den Einschnitten 8 beginnen, an einem Punkt 24 am Umfangsrand des Verschlußgliedes 2, wobei der Punkt 24 der Abziehlasche 4 diametral gegenüberliegt. Dabei verbleiben Restteile 6a,6b des Deckels mit dem Behälterende verbunden und bestimmen eine Ausgießöffnung 26, aus welcher der Behälterinhalt entnommen werden kann. Dem beschriebenen Verschlußglied kann eine (nicht dargestellte) abnehmbare, aus Kunststoff gefertigte Überzieh-Schutzkappe an sich bekannter Art zugeordnet werden, die über das Verschlußglied geschoben wird. In diesem Fall wird die Abziehlasche 4 zunächst entweder nach oben über die Oberfläche des Verschlußgliedes zurückgefaltet oder nach unten gebogen und an die Aussenseite der Behälterwand angelegt. Falls erwünscht, kann ein zweiter (nicht dargestellter) Einschnitt am Rand des Deckels, und zwar am Konvergenzpunkt 24 angeordnet werden, wodurch ein Abschälen der benachbarten Ränder der am Behälter verbleibenden, restlichen Deckelteile 6a und 6b verhindert ist.

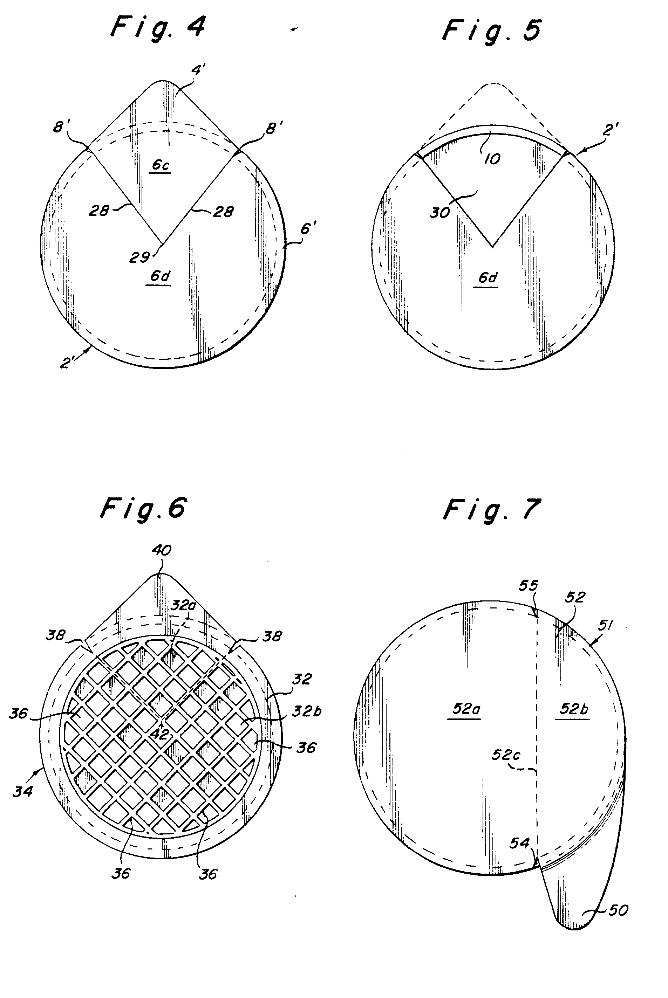

Bei der in Fig. 4 und 5 dargestellten, abgewandelten Ausführungsform ist das Verschlußglied 2 mit einem Paar konvergierender Kerblinien 28, beispielsweise in Form flacher Rillen oder Einkerbungen, versehen, die den jeweiligen Einschnitten 8' zugeordnet sind. Auf diese Weise werden die ablösbaren und am Deckel verbleibenden Teile 6c bzw. 6d jeweils genauer definiert. Die Kerblinien 28 konvergieren an einem Punkt 29, der vom Umfangsrand des Deckels im Abstand gelegen ist, so daß dann, wenn die Abziehlasche 4' des Deckels 6' vom Behälter 10 abgezogen wird, der Deckel zunächst an den Einschnitten 8' abgerissen wird und sich dann entlang den Kerblinien 28 ablöst, bis sich die Entleerungsöffnung 30 im Verschlußglied 2', wie in Fig. 5 dargestellt, ergibt.

Bei der in Fig. 6 dargestellten Abwandlung ist ein Deckel 32 eines Verschlußgliedes mit mehreren, in einem Waffelmuster angeordneten Deformationen 36 in Gestalt von Verstärkungsrippen oder dgl. versehen, welche die Gesamtfestigkeit des Verschlußgliedes verstärken.

Die Deformationen 36 sind so angeordnet, daß Einschnitte 38 an den Übergangsstellen zwischen Abziehlasche 40 und Deckel 32 mit einem Paar senkrecht zueinander verlaufender Deformationen ausgerichtet sind. Auf diese Weise wird beim Abziehen der Lasche 40 das Abreißen des Deckels 32 an den Einschnitten 38 eingeleitet und der ablösbare Deckelteil trennt sich entlang des erwähnten Paares der senkrecht zueinander verlaufenden Deformationen, die in einem Schnittpunkt 42 konvergieren. Auf diese Weise sind die ablösbaren und am Behälter verbleibenden Deckelteile 32a bzw. 32b bestimmt. Die Breite der Abziehlasche 40 bestimmt die Lage der das Abreißen einleitenden Einschnitte 38, die ihrerseits dasjenige Paar von Verstärkungsrippen bestimmt, entlang welchen der Deckel aufgetrennt wird. Auf diese Weise ist die Größe und die Form der Entleerungsöffnung im Deckel genau bestimmt.

Die Fig. 7 bis 10 zeigen eine weitere, abgewandelte Ausführungsform eines Verschlußgliedes 51, bei dem eine Abziehlasche 50 asymmetrisch oder versetzt gegenüber dem eigentlichen Deckel angeordnet ist. Da die eine Seite der Abziehlasche 50 tangential in den Umfangsrand des Deckels 52 einläuft, ergibt sich lediglich eine einzige Übergangsstelle zwischen Deckel und Abziehlasche, welche den ersten, das Abreißen einleitenden Einschnitt 54 in Gestalt eines Schlitzes oder einer Kerbe 51 enthält. Bei dieser Ausführungsform umfaßt das Verschlußglied 51 einen ringförmig nach unten abstehenden Saumteil 51a, welcher auf den nach außen umgebördelten Stirnrand des Behälters 10, wie in Fig. 9 dargestellt, aufgekräuselt oder umgeschlagen ist. Der Behälter ist mit einer herkömmlichen Schutzkappe 55 aus Kunststoff versehen.

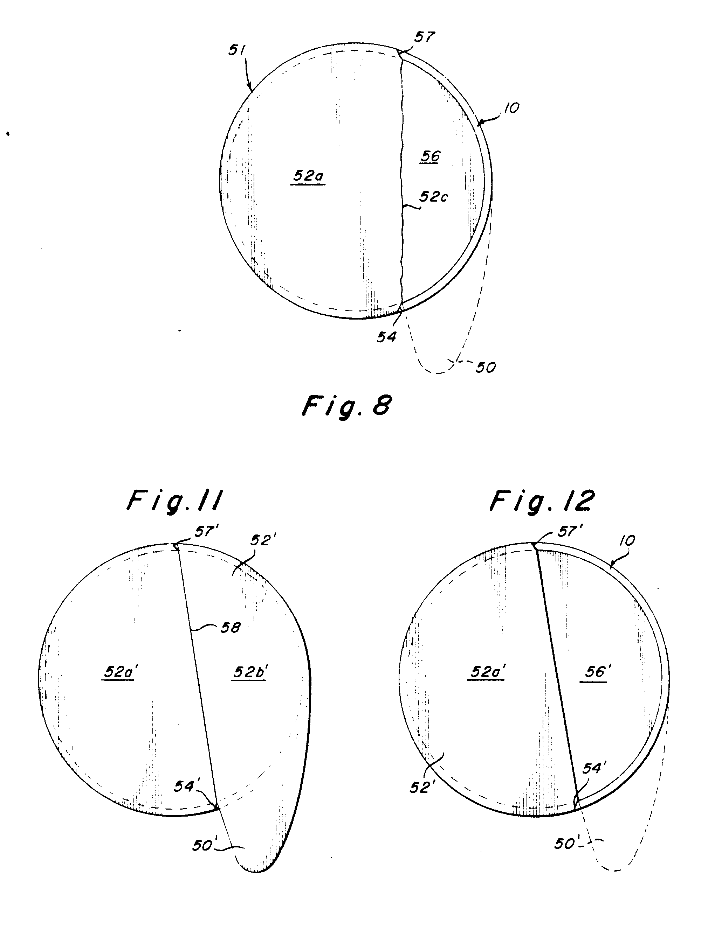

Zum Öffnen des Behälters nach Fig. 9 und 10 wird die Schutzkappe 55 abgenommen und die Abziehlasche nach oben in die horizontale Position gemäß Fig. 7 angehoben, so daß die Abziehlasche 50 anschließend seitlich abgezogen werden kann, um das Abreißen eines Deckelteils am Einschnitt 54 einzuleiten. Beim weiteren Abziehen der Lasche reißt ein Deckelteil 52b vom restlichen Deckelteil 52a ab, so daß sich eine Entleerungsöffnung 56 ergibt (Fig.8). Falls erwünscht, kann auch am anderen Ende der Abreißlinie 52c am Rand des Deckels ein Einschnitt 57 vorgesehen werden, um ein Abschälen des am Behälter verbleibenden Deckelteils 52a zu verhindern.

Wie in Fig. 11 dargestellt, kann bei einer anderen Ausführungsform ein Deckel 52' mit einer Kerblinie 58 versehen sein, welche die Abreißlinie zwischen den am Behälter verbleibenden und sich ablösenden Deckelteilen 52a' bzw. 52b' genau bestimmen.

Bei der Ausführungsform gemäß Fig. 13 ist eine Abziehlasche/70 symmetrisch zu einem Deckel angeordnet, und es ist lediglich ein einziger Einschnitt 74 an einer der beiden Übergangsstellen zwischen Lasche und Deckel vorgesehen. Ebenso wie bei den Ausführungsformen gemäß Fig.7 bis 12 wird auch die Abziehlasche 70 seitlich abgezogen, um das Einreißen am Einschnitt 74 und entlang der Abreißlinie 76 auszulösen, wobei sich ein ablösbarer Deckelteil 72b von einem am Behälter verbleibenden Deckelteil 72a trennt. Am gegenüberliegenden Ende der Abreißlinie 76 kann am Rand des Deckels wieder ein weiterer Einschnitt 78 angeordnet werden, der ein Abschälen des am Behälter verbleibenden, restlichen Decketeils verhindert. Falls gewünscht, kann auch die Abreißlinie 76 wieder vorgekerbt werden, um ein genaueres Abreißen zu gewährleisten. Bei der Ausführungsform gemäß Fig. 13 verläuft die Achse der Abziehlasche 70 in einem spitzen Winkel zur Abreißlinie 76.

Die Verschlußglieder der Ausführungsformen gemäß Fig. 7 bis 13 sind vorzugsweise mit ringförmigen, nach unten abstehenden Saumteilen versehen. Diese Saumteile können jedoch bei anderen Ausführungsformen auch entfallen. In ähnlicher Weise können auch die Ausführungsformen gemäß Fig. 1 und 6 mit derartigen Saumteilen versehen werden. Wenn die Verschlußteile mit nach unten abstehenden, ringförmigen Saumteilen versehen sind, ist der Randabschnitt des scheibenförmigen Deckels normalerweise mit dem benachbarten und nach außen umgebördelten Ende des Behälters 10 verbunden. Der ringförmige Saumteil wird konzentrisch auf die Außenseite des umgebördelten Stirnrandes 11 eingeschlagen oder eingekräuselt.

Patentansprüche

1. Verschlußglied aus flexiblem Material für einen oben offenen Behälter, g e k e n n z e i c h n e t durch folgende Merkmale

a) das Verschlußglied (2,51) umfaßt einen Deckel (6,52,72) der das oben offene Behälterende vollständig überdeckt und mit diesem Ende verbunden ist;

b) am Rand des Deckels (6,52,72) ist eine Abziehlasche (4,50, 70) vorgesehen;

c) an der am Deckelrand gelegenen Verbindungsstelle zwischen Deckel (6,52,72) und Abziehlasche (4,50,70) ist ein erster Einschnitt (8,54,74) derart angeordnet, daß sowohl die Abziehlasche als auch ein unmittelbar an diese angrenzender Teil (6c,52b) des Deckels entlang einer Abreißlinie (20,22, 28,58,76), die am ersten Einschnitt beginnt, vom Verschlußglied ablösbar sind undein Rest (6a,6b,6c,52a,72a) des Deckels unter Ausbildung einer Entleerungsöffnung (30) am Behälter (10) verbleibt.

2. Verschlußglied nach Anspruch 1, dadurch g e k e n n z e i c h - n e t, daß an dem Rand des Deckels (52) und an dem dem ersten Einschnitt (54) gegenüberliegenden Ende der Abreißlinie (52c) ein zweiter Einschnitt (55) vorgesehen ist, der ein Abschälen des Deckelrestes (52a) während der Ablösung des mit der Abziehlasche (50) verbundenen Deckelteils (52b) verhindert.

3. Verschlußglied nach Anspruch 1 oder 2, dadurch gekennzeichnet n e t, daß die Abreißlinie(52c)durch eine Kerblinie(58)bestimmt ist.

4. Verschlußglied nach Anspruch 1, 2 oder 3, dadurch g e k e n n - z e i c h n e t, daß die Abziehlasche (50) unsymmetrisch zum Deckel (52) angeordnet ist und auf ihrer einen Seite mit ihrem Rand tangential in den Rand des Behälters übergeht, so daß auf der anderen Seite nur eine einzige Obergangsstelle zwischen Lasche und Deckel vorliegt, an welcher der erste Einschnitt (54) vorgesehen ist.

5. Verschlußglied nach einem der Ansprüche 1 bis 4, dadurch g e - k e n n z e i c h n e t, daß die Abreißlinie (52c), vorzugsweise in Gestalt einer Kerblinie (58) von dem ersten Einschnitt (54) bis zum gegenüberliegenden Deckelrand reicht.

6. Verschlußglied nach einem der voranstehenden Ansprüche, dadurch g e k e n n z e i c h n e t, daß die Abziehlasche (70) symmetrisch zum Deckel (72) angerodnet ist und an beiden, einander gegenüberliegenden Seiten der Lasche jeweils eine Obergangsstelle zum Deckel hin ausgebildet ist.

7. Verschlußglied nach Anspruch 6, dadurch g e k e n n z e i c h - n e t, daß lediglich an einer Obergangsstelle zwischen Lasche (70) und Deckel (72) ein erster Einschnitt vorgesehen ist, so daß sich beim Ablösen eine Abreißlinie ergibt, die mit der Achse der Abziehlasche (70) einen spitzen Winkel einschließt.

8. Verschlußglied nach einem der voranstehenden Ansprüche, dadurch g e k e n n z e i c h n e t, daß der Behälter (10) rohrförmig ausgebildet ist und konzentrisch zueinander liegende Schichten aufweist, nämlich eine undurchlässige, innere Futterschicht (16) , eine fasrige Wandschicht (14) und eine äußere Etikettierschicht (12), daß der Behälter (10) an seinem offenen Ende nach aussen umgebördelt ist, so daß die Futterschicht (16) dem Verschlußglied (2) zuge_kehrt ist und an diesem anliegt, und daß der Deckel (52) an seinem Rand einen Saumteil (51a) aufweist, der konzentrisch mit dem umgebördelten Rand des Behälters (10) verbunden ist.

9. Verschlußglied nach Anspruch 8, dadurch g e k e n n z e i c h - n e t, daß die Abziehlasche (50) nach unten gegen die Außenseite des Behälters (10) gebogen ist.

0007971

10. Verschlußglied nach einem der voranstehenden Ansprüche, dadurch g e k e n n z e i c h n e t , daß eine Überziehkappe (55) mit einem ringförmigen Randteil vorgesehen ist, die konzentrisch über den Behälterrand und das Verschlußglied aufbringbar ist.

11. Verschlußglied nach einem der voranstehenden Ansprüche, dadurch g e k e n n z e i c h n e t , daß der Deckel (6) mit der Futterschicht (16) des Behälters (10) durch ein Bindemittel verbunden ist, vorzugsweise Polyäthylen, extrudierbarer Heißsiegelkleber, Lackgel oder Vinylcopolymerisat.

12. Verschlußglied nach einem der voranstehenden Ansprüche, dadurch g e k e n n z e i c h n e t , daß der Deckel (6) hermetisch abgedichtet mit dem Behälter (10) verbunden ist.

13. Verschlußglied nach Anspruch 12, dadurch g e k e n n z e i c h n e t , daß der Deckel (6) durch ein flüssiges Klebemittel mit dem Behälter verbunden ist.

14. Verschlußglied nach einem der voranstehenden Ansprüche, dadurch g e k e n n z e i c h n e t , daß an beiden Übergangsstellen der Lasche (4,4') in den Deckel (6,6') erste Einschnitte (8,8') angeordnet sind und die Abreißlinien (20,22;28) aufeinander zu konvergieren.

15. Verschlußglied nach Anspruch 14, dadurch g e k e n n z e i c h n e t , daß die vorzugsweise als Kerblinien ausgebildeten Abreißlinien (28) in einem Punkt (29) zusammenlaufen, der im Abstand vom Deckelrand angeordnet ist.

16. Verschlußglied nach einem der voranstehenden Ansprüche, dadurch g e k e n n z e i c h n e t , daß der Deckel (6) im wesentlichen eben ausgebildet ist.

17. Verschlußglied nach einem der vorangehenden Ansprüche, dadurch g e k e n n z e i c h n e t , daß der Deckel (32) mit einer Mehrzahl von in einem Waffelmuster angeordneten Verstärkungsrippen (36) oder anderen, den Deckel verstärkenden Deformationen versehen ist, die zueinander senkrecht bis zum Deckelrand verlaufen.

18. Verschlußglied nach einem der voranstehenden Ansprüche, dadurch g e k e n n z e i c h n e t, daß die ersten Einschnitte (38) mit zwei senkrecht zueinander verlaufenden Verstärkungsdeformationen (36) ausgerichtet sind, so daß ein Teil des Deckels entlang dieser Verstärkungsdeformationen abreißbar ist.

1/3

0007971

Fig. 1

Fig. 2

Fig. 10

Fig. 9

Fig. 3

Fig. 13

Fig. 4

Fig. 5

Fig. 6

Fig. 7

Fig. 8

Fig. 11

Fig. 12

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>CH - A - 442 135</u> (ALUPAK A.G.)  <br> * Seite 1, Spalte 1, Zeilen 34-40; Spalte 2, Zeilen 1-18; Figur 1 * | 1,12, 14-16 |
| X | <u>US - A - 3 893 566</u> (SCOTT PAPER COMPANY)  <br> * Spalte 2, Zeilen 44-50, 66-68; Spalte 3, Zeilen 1-15; Spalte 4, Zeilen 22-59; Figuren 1,2 * | 1,2,10, 13,16 |
| | <u>FR - A - 2 353 456</u> (BOISE CASCADE CORPORATION)  <br> * Seite 4, Zeilen 28-40; Seite 5, Zeilen 1-9, 30-37; Figur 1 * | 8,10, 11,12 |

**KLASSIFIKATION DER ANMELDUNG (Int.Cl. 3)**

B 65 D 77/20

**RECHERCHIERTE SACHGEBIETE (Int. Cl. 3)**

B 65 D

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-11-1979 | BAERT |

EPA form 1503.1  06.78